# FASCICULE DE BREVET EUROPEEN

(11) **EP 1 834 100 B1**
(45) Date de publication et mention de la délivrance du brevet: **27.02.2008**
(21) Numéro de dépôt: 05847556.7
(22) Date de dépôt: 16.12.2005
(51) Int. Cl.: F16B 2/06

(54) **CHAPE DE FIXATION ET ASSEMBLAGE D'UNE PIECE SUR UN SUPPORT AU MOYEN DE LA DITE CHAPE**
BEFESTIGUNGSGABELVERBINDUNG UND MONTAGE EINES TEILS AN EINEM TRÄGER MITTELS DER VERBINDUNG
FIXING FORK JOINT AND MOUNTING OF A PART ON A SUPPORT BY MEANS OF SAID JOINT

(30) Priorité: 29.12.2004 FR 0414027
(43) Date de publication de la demande: 19.09.2007
(73) Titulaire: RENAULT S.A.S., 92100 Boulogne Billancourt (FR)
(72) Inventeur: BOURI, Dominique, F-95220 Herblay (FR); NAUDIN, Olivier, F-92500 Rueil Malmaison (FR); BOUFFET, David, F-78150 Le Chesnay (FR)
(86) Numéro de dépôt international: PCT/FR2005/051097
(87) Numéro de publication internationale: WO 2006/072722

(56) Documents cités:
- EP-A- 0 648 636
- DE-A1- 4 207 583
- US-A- 4 526 333

## Description

La présente invention concerne une chape de fixation et un système d'assemblage d'une pièce sur un support au moyen de la dite chape.

Dans de nombreux assemblages, et en particulier dans le domaine de l'automobile, il est fréquent de devoir assembler deux pièces ou plus avec des contraintes de positionnement relatif qui impliquent des ajustements relativement précis. Par exemple, dans le domaine de l'automobile, on peut se trouver confronté au problème de maintenir une pièce, telle qu'une tubulure, sur un support quelconque, tel qu'une paroi de structure du véhicule ou un élément d'un moteur, cette pièce devant par ailleurs être reliée à un autre ensemble, par exemple une bride de collecteur d'échappement sur lequel la tubulure doit être connectée.

Pour réaliser un tel assemblage, appelé notamment "assemblage par béquillage", il est fréquent d'utiliser une chape, qui présente une forme générale en U dont la base est, dans l'exemple prémentionné, fixée par des vis sur le support, et la pièce à maintenir comporte une partie de fixation, adaptée pour être insérée entre les ailes du U de la chape. Un boulon traverse simultanément les dites ailes et la dite partie de fixation, en passant dans des alésages prévus à cet effet, et il est serré de manière à enserrer la partie de fixation entre les ailes de la chape.

Un autre type de chape, similaire dans son principe, est décrit dans le document EP 0 648 636 A1.

Un premier problème est d'assurer le positionnement correct de la pièce à fixer par rapport à l'autre pièce ou ensemble, tel que la bride de collecteur pré-mentionnée par exemple, et le maintien de cette pièce par rapport au support, alors que les inévitables dispersions dimensionnelles font que cette bride n'est pas toujours exactement à la même place par rapport au dit support sur lequel la chape est fixée. Généralement, on accorde un certain jeu au niveau du passage des vis de fixation dans les trous de la chape, pour autoriser des écarts de positionnement par rapport au support, dans le plan de ce support. On peut de même prévoir un certain jeu entre le boulon d'assemblage de la pièce sur la chape et les trous de ses ailes ou l'alésage de la pièce, ce qui permet d'accepter les écarts de positionnement dans la direction perpendiculaire au plan de fixation de la chape sur le support. Un inconvénient cependant est que, pour assurer le maintien et un positionnement au moins approché de la chape sur le support sans que, ou avant que, la pièce soit elle-même correctement et définitivement positionnée par rapport au dit support, il faut utiliser un gabarit de montage qui peut être complexe.

Un autre problème se pose du fait des dispersions dimensionnelles dans l'écartement des ailes de la chape et dans la largeur, selon la direction de l'axe du boulon, de la partie de fixation de la pièce, qui s'insère et doit être serrée entre les ailes. Si cette largeur est trop petite par rapport à l'écartement entre les ailes de la chape, il en résultera des contraintes importantes dans ces ailes lors du serrage du boulon, pouvant conduire à leur rupture. Si, pour éviter ce problème, on cherche à l'inverse à réduire les jeux, on risque de devoir insérer à force la pièce dans la chape, et créer aussi des contraintes dans les ailes et compliquer l'opération d'assemblage.

Pour éviter ces problèmes, il est connu de remplacer la chape par deux béquilles ou équerres, qui se substituent donc aux deux ailes de la chape. Ces deux béquilles étant indépendantes l'une de l'autre, il devient possible de les assembler par serrage sur la partie de fixation de la pièce, sans créer de contraintes mécaniques. Mais il y a alors deux pièces séparées à fixer sur le support, et un problème supplémentaire de positionnement résulte de leur positionnement relatif, qui n'est fixe qu'après serrage du boulon. Il faut donc, lors du montage, maintenir provisoirement en place chaque béquille séparément, ce qui complique le montage.

La présente invention a pour but de résoudre ces problèmes et vise en particulier à fournir un système d'assemblage d'une pièce sur un support au moyen d'une chape qui soit de montage facile, peu coûteux, et ne génère pas de contraintes dans les pièces assemblées ou dans la chape. Elle vise aussi à proposer une chape adaptée à un tel système, qui puisse se substituer à une chape selon l'art antérieur, sans modifier son environnement, mais en facilitant grandement son montage.

Avec ces objectifs en vue, l'invention a pour objet une chape de fixation d'une pièce sur un support, la chape comportant deux zones d'appui destinées à être serrées sur le support et deux ailes destinées à enserrer une partie de fixation de la pièce par un boulon serrant les dites ailes de part et d'autre de la dite partie de fixation,
caractérisée en ce que chaque aile est liée rigidement à une seule zone d'appui et les deux zones d'appui sont reliées ensemble par un lien semi-rigide conformé de manière à se déformer sous contrainte, en particulier en flambement, pour autoriser une variation de l'écartement entre les ailes, dans la direction de l'axe du boulon, tout en assurant un maintien en position relative des deux ailes sensiblement parallèles.

Ainsi, grâce à la déformabilité du lien semi-rigide, lors du serrage du boulon, les deux ailes peuvent se rapprocher l'une de l'autre pour s'adapter à la largeur exacte de la partie de fixation de la pièce et enserrer celle-ci, mais sans créer de contraintes dans l'assemblage, en particulier dans la chape en elle-même, alors que dans une chape traditionnelle, le serrage des ailes et donc leur rapprochement conduit nécessairement au moins à des contraintes de flexion dans les ailes et/ou dans la base de la chape.

Ne subsistent que les contraintes dans le lien semi-rigide, ces contraintes n'étant cependant aucunement préjudiciables par la suite pour la résistance de l'assemblage puisque chaque zone d'appui est fixée sur le support indépendamment de l'autre et que l'assemblage, après serrage de toutes les vis, se comporte pratiquement comme si le lien n'existait pas. Une fois l'assemblage réalisé, le lien déformable n'a en fait plus aucune fonction dans la tenue de l'assemblage.

Préférentiellement, le lien semi-rigide est un feuillard plat.

Préférentiellement encore, le lien semi-rigide a une prédéformation en forme de S, pour faciliter sa déformation ultérieure sous contrainte.

Selon d'autres dispositions particulières :
- les zones d'appui et les ailes sont formées en tôle emboutie,
- le lien semi-rigide est soudé sur les zones d'appui,
- une des ailes comporte un écrou soudé, pour recevoir le boulon d'assemblage.

L'invention a aussi pour objet un système d'assemblage d'une pièce sur un support au moyen de la dite chape, caractérisé en ce que le support comporte deux bossages ayant leur surface dans le même plan, adaptées pour recevoir en appui les zones d'appui de la chape. Les bossages proéminents par rapport au reste de la surface du support permettent ainsi une libre déformation du lien lors du montage, sans que le lien, en fléchissant, vienne buter contre le support et gêne le serrage de la chape.

Pour que les deux zones d'appui de la chape puissent se rapprocher l'une de l'autre lors du serrage du boulon, on prévoira un jeu minimal entre les vis de serrage sur le support et les trous ménagés pour ces vis dans la chape.

D'autres caractéristiques et avantages apparaîtront dans la description qui va être faite d'un exemple de réalisation d'une chape selon l'invention et de son utilisation pour la fixation d'une conduite à bride coudée.

On se reportera aux dessins annexés dans lesquels :
- la figure 1 est une vue de l'assemblage terminé,
- la figure 2 est une vue en perspective de la chape seule
- la figure 3 est une vue de dessus de la chape,
- la figure 4 est une représentation en éclaté des éléments de l'assemblage, hormis la conduite coudée.

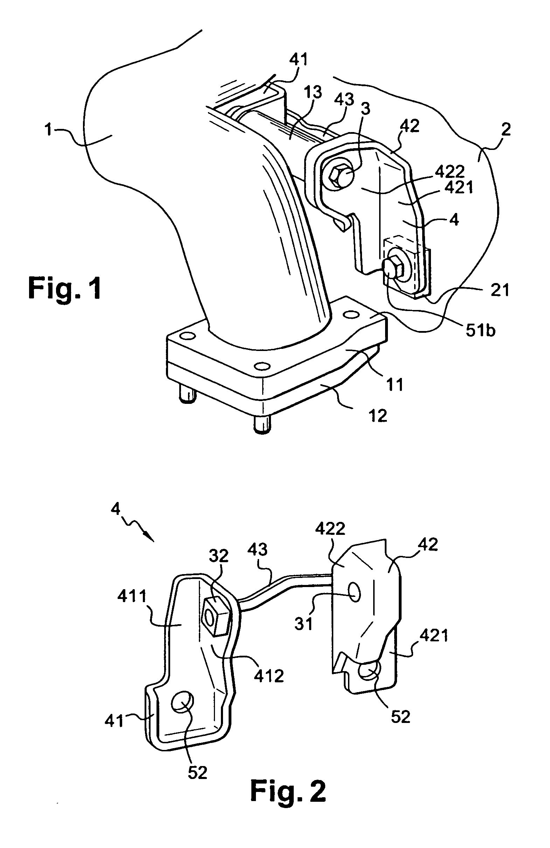

La figure 1 représente l'assemblage d'une pièce constituée ici d'une canalisation coudée 1 sur un support 2. La canalisation comporte une bride 11 de raccordement à une contrebride 12 d'un ensemble non représenté, tel que par exemple un collecteur d'échappement.

La canalisation 1 comporte par ailleurs une partie de fixation 13, formée d'une pièce avec la canalisation 1 et se présentant sous forme d'une sorte d'entretoise sensiblement cylindrique, percée axialement pour permettre d'y faire passer un boulon de fixation 3.

La chape de fixation 4 est formée de deux pièces formant équerres 41, 42, par exemple en tôle d'acier emboutie, reliées par un lien semi-rigide 43.

Chaque équerre 41, 42 comporte une partie constituant une zone d'appui 411, respectivement 421, destinée à être appliquée contre des bossages 21 du support et fixée sur le support 2 par des vis 51a, 51b. Les vis 51a, 51b passent dans des trous 52 percés dans les dites zones d'appui à un diamètre suffisamment supérieur à celui des vis, pour permettre le serrage des vis avec une position désaxée entre trou 52 et vis 51a, 51b.

Chaque équerre 41, 42 comporte aussi une paroi s'étendant perpendiculairement à la zone d'appui et liée rigidement à celle-ci, pour former les ailes 412, respectivement 422, de la chape 4 qui s'étendent donc parallèlement l'une à l'autre. Les deux ailes sont percées de trous 31, qui sont coaxiaux, pour le passage du boulon d'assemblage 3, et l'une porte également un écrou 32 pour le serrage de ce boulon.

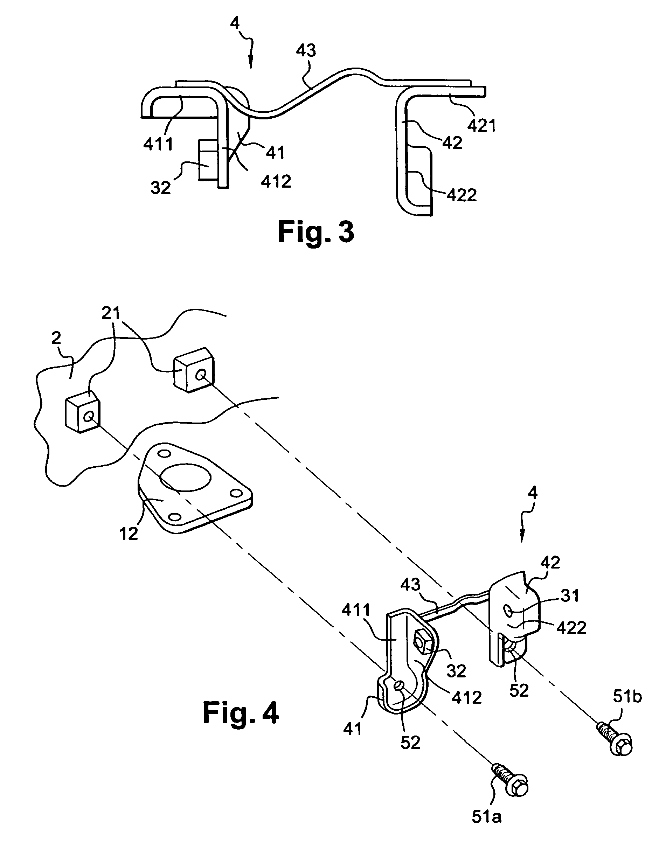

Le lien semi-rigide 43 est formé d'un feuillard plat, de faible épaisseur pour qu'il puisse se déformer par flambement sous l'effet d'un effort de rapprochement des deux équerres, mais suffisamment rigide cependant pour assurer une liaison sensiblement rigide entre les équerres tant qu'elles ne sont pas soumises à un tel effort. Pour faciliter cette déformation par flambement, le lien est pré conformé en forme de "S" comme on le voit bien sur les figures, de sorte que lors d'un rapprochement des équerres, les courbures du "S" et ne font que s'accentuer, comme on l'a particulièrement rendu visible figure 3.

La réalisation de l'assemblage s'effectue de la manière suivante.

Dans une phase de préparation, la chape 4 est présentée sur le support et y est maintenue appliquée sur les bossages 21 par les vis 51a, 51b, qui ne sont provisoirement pas serrées. Un prépositionnement est effectué au moyen d'un gabarit de positionnement, de type connu en soi, pour ajuster en position la chape 4, et plus particulièrement son aile 412, par rapport à la contrebride 12, avec laquelle la bride 11 de la canalisation 1 devra ensuite être en concordance. La première vis 51a est alors serrée.

Lors du montage de la canalisation 1, celle-ci est présentée avec sa bride 11 en concordance avec la contrebride 12, et la partie de fixation 13 insérée entre les ailes 421 et 422 de la chape. Le boulon 3 est mis en place, passant dans le trou 31 de l'aile 422 et dans le perçage de la partie de fixation 13, et vissé dans l'écrou 32 de la deuxième aile 412 jusqu'au serrage complet des ailes contre la dite partie de fixation 13. Lors de ce serrage, le lien 43 se déforme comme indiqué précédemment, pour permettre le rapprochement des deux équerres 41, 42. On notera que la déformation du lien, qui peut localement déplacer une zone du lien vers la paroi 2, est notamment autorisée du fait de la présence des bossages qui éloignent la chape de la dite paroi. On notera aussi que le déplacement relatif des deux équerres est autorisé du fait du jeu prévu des vis 51a, 51b dans les trous 52 des zones d'appui.

Puis la deuxième vis 51b est ensuite serrée pour terminer l'assemblage, sans qu'il y ait de contraintes générées dans chacune des équerres, assurant ainsi une meilleure tenue et une meilleure longévité à l'assemblage.

L'invention n'est pas limitée à l'exemple de réalisation de chape, ni à son application, décrits ci-dessus. L'invention pourra trouver de nombreuses autres applications, en particulier dans le domaine de l'automobile, pour l'assemblage de pièces susceptibles de subir des dispersions dimensionnelles qui peuvent influer fortement sur les chaînes de cotes. Les différentes parties de la chape pourront aussi être modifiées dans leur forme sans sortir du cadre de l'invention dans la mesure ou reste la présence du lien semi-rigide reliant les deux parties de la chape. Egalement, le boulon pourrait être remplacé par tout autre organe d'assemblage et de serrage fonctionnellement équivalent.

## Revendications

1. Chape de fixation d'une pièce (1) sur un support (2), la chape comportant deux zones d'appui destinées à être serrées sur le support et deux ailes destinées à enserrer une partie de fixation (13) de la pièce par un boulon (3) serrant les dites ailes de part et d'autre de la dite partie de fixation,
**caractérisée en ce que** chaque aile (412, 422) est liée rigidement à une seule zone d'appui (411, 421) et les deux zones d'appui sont reliées ensemble par un lien semi-rigide (43) conformé de manière à se déformer en flambement sous contrainte pour autoriser une variation de l'écartement entre les ailes, dans la direction de l'axe du boulon, tout en assurant un maintien en position relative des deux ailes sensiblement parallèles.

2. Chape de fixation selon la revendication 1, **caractérisée en ce que** le lien semi-rigide (43) est un feuillard plat.

3. Chape de fixation selon la revendication 2, **caractérisée en ce que** le lien semi-rigide (43) a une prédéformation en forme de "S".

4. Chape de fixation selon la revendication 1, **caractérisée en ce que** les zones d'appui (411, 421) et les ailes (412, 422) sont formées d'une pièce en tôle emboutie.

5. Chape de fixation selon la revendication 1, **caractérisée en ce que** le lien semi-rigide (43) est soudé sur les zones d'appui (411, 421).

6. Chape de fixation selon la revendication 1, **caractérisée en ce qu'**une des ailes (412) comporte un écrou soudé (32), pour recevoir le boulon d'assemblage (3).

7. Système d'assemblage d'une pièce (1) sur un support (2) au moyen d'une chape (4) selon l'une quelconque des revendications 1 à 6, **caractérisé en ce que** le support comporte deux bossages (21) ayant leur surface dans le même plan, adaptées pour recevoir en appui les zones d'appui (411, 421) de la chape.

8. Système d'assemblage selon la revendication 7, **caractérisé en ce que** un jeu est prévu entre les vis (51a, 51b) de serrage des zones d'appui (411, 421) sur le support et les trous (52) ménagés pour ces vis dans la chape.

## Claims

1. Fork joint for fixing a part (1) to a support (2), the fork joint comprising two bearing zones intended to be clamped to the support and two wings intended to clamp a fixing portion (13) of the part by means of a bolt (3) clamping said wings on either side of said fixing portion,
**characterized in that** each wing (412, 422) is rigidly linked to a single bearing zone (411, 421) and the two bearing zones are mutually connected by a semi-rigid link (43) configured in such a way as to deform under stress by buckling so as to allow a change of distance between the wings, in the direction of the bolt axis, while at the same time ensuring that the two substantially parallel wings are held in position relative to each other.

2. Fixing fork joint according to Claim 1, **characterized in that** the semi-rigid link (43) is a flat steel strip.

3. Fixing fork joint according to Claim 2, **characterized in that** the semi-rigid link (43) has a predeformation in the shape of an "S".

4. Fixing fork joint according to Claim 1, **characterized in that** the bearing zones (411, 421) and the wings (412, 422) are formed in one piece from buckled plate.

5. Fixing fork joint according to Claim 1, **characterized in that** the semi-rigid link (43) is welded to the bearing zones (411, 421).

6. Fixing fork joint according to Claim 1, **characterized in that** one of the wings (412) comprises a welded nut (32), for receiving the mounting bolt (3).

7. System for mounting a part (1) on a support (2) by means of a fork joint (4) according to any one of Claims 1 to 6, **characterized in that** the support comprises two bosses (21) which have their surface in the same plane and are tailored to receive in support the bearing zones (411, 421) of the fork joint.

8. Mounting system according to Claim 7, **characterized in that** a play is provided between the binding screws (51a, 51b) for clamping the bearing zones (411, 421) to the support and the holes (52) provided for these screws in the fork joint.

## Patentansprüche

1. Gabelkopf zur Befestigung eines Bauteils (1) auf einem Träger (2), wobei der Gabelkopf zwei Auflagezonen, die dazu bestimmt sind, auf den Träger geklemmt zu werden, und zwei Flügel aufweist, die dazu bestimmt sind, einen Befestigungsbereich (13) des Bauteils durch einen Bolzen (3) einzuklemmen, der die Flügel zu beiden Seiten des Befestigungsbereichs festklemmt,
**dadurch gekennzeichnet, dass** jeder Flügel (412, 422) steif mit einer einzigen Auflagezone (411, 421) verbunden ist, und die zwei Auflagezonen miteinander über ein halbsteifes Bindeglied (43) verbunden sind, das so gestaltet ist, dass es sich unter Beanspruchung knickend verformt, um eine Veränderung des Abstands zwischen den Flügeln in Richtung der Achse des Bolzens zu erlauben und dabei einen Halt der zwei Flügel in einer im Wesentlichen parallelen Stellung zueinander zu gewährleisten.

2. Befestigungs-Gabelkopf nach Anspruch 1, **dadurch gekennzeichnet, dass** das halbsteife Bindeglied (43) ein flaches Bandeisen ist.

3. Befestigungs-Gabelkopf nach Anspruch 2, **dadurch gekennzeichnet, dass** das halbsteife Bindeglied (43) eine Vorverformung in Form eines "S" aufweist.

4. Befestigungs-Gabelkopf nach Anspruch 1, **dadurch gekennzeichnet, dass** die Auflagezonen (411, 421) und die Flügel (412, 422) aus einem Bauteil aus Buckelblech geformt sind.

5. Befestigungs-Gabelkopf nach Anspruch 1, **dadurch gekennzeichnet, dass** das halbsteife Bindeglied (43) auf die Auflagezonen (411, 421) geschweißt ist.

6. Befestigungs-Gabelkopf nach Anspruch 1, **dadurch gekennzeichnet, dass** einer der Flügel (412) eine geschweißte Mutter (32) aufweist, um den Montagebolzen (3) aufzunehmen.

7. Montagesystem eines Bauteils (1) auf einen Träger (2) mittels eines Gabelkopfs (4) nach einem der Ansprüche 1 bis 6, **dadurch gekennzeichnet, dass** der Träger zwei Ansätze (21) aufweist, deren Oberfläche in der gleichen Ebene liegt, die geeignet sind, um die Auflagezonen (411, 421) des Gabelkopfs in Auflage aufzunehmen.

8. Montagesystem nach Anspruch 7, **dadurch gekennzeichnet, dass** ein Spielraum zwischen den Klemmschrauben (51a, 51b) der Auflagezonen (411, 421) auf dem Träger und den Löchern (52) vorgesehen ist, die für diese Schrauben im Gabelkopf ausgespart sind.
